(19) Europäisches Patentamt
European Patent Office
Office européen des brevets

(11) **EP 4 492 611 A1**

(12) **EUROPÄISCHE PATENTANMELDUNG**

(43) Veröffentlichungstag:
**15.01.2025 Patentblatt 2025/03**

(21) Anmeldenummer: **23185014.0**

(22) Anmeldetag: **12.07.2023**

(51) Internationale Patentklassifikation (IPC):
**H02J 3/32** (2006.01) **H02J 3/38** (2006.01)

(52) Gemeinsame Patentklassifikation (CPC):
**H02J 3/32; H02J 3/381;** H02J 2203/10;
H02J 2300/24

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder: **Die Erfindernennung liegt noch nicht vor**

(74) Vertreter: **Siemens Patent Attorneys**
**Postfach 22 16 34**
**80506 München (DE)**

(54) **VERFAHREN UND VORRICHTUNG ZUM BETRIEB EINES BATTERIESPEICHERS INNERHALB EINER ERNEUERBAREN-ENERGIE-GEMEINSCHAFT**

(57) Es wird ein Verfahren zum Betrieb eines Batteriespeichers (2) innerhalb einer Erneuerbaren-Energie-Gemeinschaft (1) vorgeschlagen, wobei die Erneuerbare-Energie-Gemeinschaft (1) mehrere Energiesysteme umfasst, die dazu ausgebildet sind, Grünstrom (4) untereinander auszutauschen, sowie Graustrom (5) selbst zu verwenden und/oder für bezüglich der Erneuerbaren-Energie-Gemeinschaft (1) externe Energiesysteme bereitzustellen, wobei zur Steuerung des Batteriespeichers (2) eine Steuereinheit verwendet wird, die dazu ausgebildet ist, basierend auf einem computergestützten Optimierungsverfahren Sollwerte für Ladeleistungen und/oder Entladeleistungen des Batteriespeichers (2) zu berechnen, wobei der Batteriespeicher (2) entsprechend den berechneten Sollwerten durch die Steuereinheit gesteuert wird. Das Verfahren ist gekennzeichnet dadurch, dass beim Optimierungsverfahren die Gesamtkapazität $C$ des Batteriespeichers (2) in eine erste und zweite Teilkapazität $C_{1,t}$, $C_{2,t}$ (21, 22) eingeteilt wird, wobei die erste Teilkapazität $C_{1,t}$ (21) für Grünstrom (4) und die zweite Teilkapazität $C_{2,t}$ für Graustrom (5) vorgesehen ist, und die zweite Teilkapazität $C_{2,t}$ (22) beim Optimierungsverfahren durch einen Schwellenwert $C_{2,limit,T}$ begrenzt wird, der durch ein Entladen innerhalb eines Zeitbereiches $T$ unter Berücksichtigung einer festgelegten Entladeleistungsgrenze $P_{max}$ und einer festgelegten minimalen zweiten Teilkapazität $C_{2,0}$ (22) maximal erreichbar ist.

Weiterhin betrifft die Erfindung eine Steuereinheit sowie eine Erneuerbare-Energie-Gemeinschaft (1).

**Beschreibung**

Die Erfindung betrifft ein Verfahren gemäß dem Oberbegriff des Patentanspruches 1, eine Steuereinheit gemäß dem Oberbegriff des Patentanspruches 11 sowie eine Erneuerbaren-Energie-Gemeinschaft gemäß dem Oberbegriff des Patentanspruches 13.

Erneuerbare-Energie-Gemeinschaften (auch: erneuerbare Energiegemeinschaften) sind ein Verbund von mehreren Energiesystemen, beispielsweise von privaten Haushalten und/oder kleinen bis mittleren Unternehmen, die erneuerbare Energie, insbesondere erneuerbar erzeugten Strom, innerhalb des Verbundes austauschen. Hierbei können die Energiesysteme der Erneuerbaren-Energie-Gemeinschaften somit Energie aus erneuerbaren Quellen erzeugen, die eigenerzeugte Energie verbrauchen, speichern und/oder verkaufen.

Grundgedanke einer Erneuerbare-Energie-Gemeinschaft ist somit, dass deren Energiesysteme lediglich erneuerbar erzeugten Strom (Grünstrom) untereinander austauschen dürfen. Nicht erneuerbar erzeugter Strom (Graustrom), der beispielsweise aus einem der Erneuerbare-Energie-Gemeinschaft übergeordneten Stromnetz bezogen wurde, darf lediglich selbst verwendet werden oder in das übergeordnete Stromnetz eingespeist werden. Im Hinblick einer Erneuerbare-Energie-Gemeinschaft sind somit Grünstrom und Graustrom zu unterscheiden.

Eine Erneuerbare-Energie-Gemeinschaft umfasst typischerweise mehrere Energiesysteme mit energietechnischen Anlagen (Assets), die in Erzeuger, Speicher, nicht-steuerbare Lasten und steuerbare Lasten eingeteilt werden können. Hierbei ist für die Erneuerbare-Energie-Gemeinschaft vorgesehen, dass die Stromaustausche zwischen den beteiligten Energiesystemen mittels einer bezüglich den Energiesystemen zentralen Steuereinheit gesteuert werden. Mit anderen Worten werden die steuerbaren Anlagen der Erneuerbaren-Energie-Gemeinschaft durch die Steuereinheit zentral gesteuert.

Von besonderer Bedeutung für den Betrieb einer Erneuerbare-Energie-Gemeinschaft sind Batteriespeicher. Da innerhalb der Erneuerbaren-Energie-Gemeinschaft lediglich Grünstrom ausgetauscht werden darf, ist es erforderlich, die Herkunft der innerhalb von Batteriespeichern gespeicherten elektrischen Energie zu kennzeichnen. Mit anderen Worten muss für die gespeicherte elektrische Energie ebenfalls Grünstrom und Graustrom unterschieden werden.

Der Graustromanteil innerhalb eines Batteriespeichers ist durch die Erneuerbare-Energie-Gemeinschaft nicht verwendbar. Weiterhin sind reduzierte Netztarife und gesetzliche Befreiungen von energiebezogen Steuern typischerweise nur für den lokal erzeugten Grünstrom wirksam.

Weiterhin ist es typischerweise nicht wirtschaftlich den Graustrom aus dem Batteriespeicher ins Stromnetz zu entladen, da der Einspeisetarif gegenüber den Bezugskosten - bestehend aus Energiepreis, Netzentgelt und Steuern - üblicherweise deutlich geringer ist. Somit kann der Graustromanteil des Batteriespeichers typischerweise nur zur Deckung des Eigenbedarfs des Einzelteilnehmers genutzt werden, das heißt selbst verwendet werden.

Nachteilig hierbei ist, dass gespeicherter Graustrom einen bestimmten Anteil der Gesamtkapazität des Batteriespeichers für Grünstrom blockiert.

Grundsätzlich ist es von Vorteil für die Erneuerbare-Energie-Gemeinschaft, wenn der Grünstromanteil innerhalb der Batteriespeicher möglichst maximal ist, da dieser Flexibilität innerhalb der Erneuerbaren-Energie-Gemeinschaft bereitstellt. Insbesondere könnte sich über einen längeren Zeitraum eine Energiemenge an Graustrom in den Batteriespeichern ansammeln und somit kontinuierlich einen immer größer werdenden Anteil der genannten Flexibilität blockieren. Gleichzeitig kann jedoch ein bestimmter Graustromanteil, beispielsweise vorgehalten zur Deckung des Eigenbedarfs eines Einzelteilnehmers, von Vorteil sein, beispielsweise als Reserve für Zeiträume, in welchen eine geringere erneuerbare Erzeugung vorhanden ist.

Der vorliegenden Erfindung liegt die Aufgabe zugrunde, den oben genannten technischen Konflikt zwischen der Speicherung von Grünstrom und der Speicherung von Graustrom im Rahmen einer Erneuerbare-Energie-Gemeinschaft zu lösen.

Die Aufgabe wird durch ein Verfahren mit den Merkmalen des unabhängigen Patentanspruches 1, durch eine Steuereinheit mit den Merkmalen des unabhängigen Patentanspruches 11, sowie durch eine Erneuerbare-Energie-Gemeinschaft mit den Merkmalen des unabhängigen Patentanspruches 14 gelöst. In den abhängigen Patentansprüchen sind vorteilhafte Ausgestaltungen und Weiterbildungen der Erfindung angegeben.

Das erfindungsgemäße Verfahren zum Betrieb eines Batteriespeichers innerhalb einer Erneuerbaren-Energie-Gemeinschaft, wobei die Erneuerbare-Energie-Gemeinschaft mehrere Energiesysteme umfasst, die dazu ausgebildet sind, Grünstrom untereinander auszutauschen, sowie Graustrom selbst zu verwenden und/oder für bezüglich der Erneuerbaren-Energie-Gemeinschaft externe Energiesysteme bereitzustellen, wobei zur Steuerung des Batteriespeichers eine Steuereinheit verwendet wird, die dazu ausgebildet ist, basierend auf einem computergestützten Optimierungsverfahren Sollwerte für Ladeleistungen und/oder Entladeleistungen des Batteriespeichers zu berechnen, wobei der Batteriespeicher entsprechend den berechneten Sollwerten durch die Steuereinheit gesteuert wird, ist gekennzeichnet dadurch, dass beim Optimierungsverfahren die Gesamtkapazität $C$ des Batteriespeichers in eine erste und zweite Teilkapazität $C_{1,t}$, $C_{2,t}$ eingeteilt wird, wobei die erste Teilkapazität $C_{1,t}$ für Grünstrom und die zweite Teilkapazität $C_{2,t}$ für Graustrom vorgesehen ist, und die zweite Teilkapazität $C_{2,t}$ beim Optimierungsverfahren durch einen Schwellenwert

$C_{2,\text{limit},T}$ begrenzt wird, der durch ein Entladen innerhalb eines Zeitbereiches $T$ unter Berücksichtigung einer festgelegten Entladeleistungsgrenze $P_{\text{max}}$ und einer festgelegten minimalen zweiten Teilkapazität $C_{2,0}$ maximal erreichbar ist.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein.

Gemäß der Erfindung werden Kapazitäten und Ladezustände als äquivalent angesehen. Beispielsweise kann innerhalb des Optimierungsverfahrens statt der ersten und zweiten Teilkapazität $C_{1,t}$, $C_{2,t}$ der jeweilige Ladezustand $SoC_{1,t} = C_{1,t}/C$, $SoC_{2,t} = C_{2,t}/C$ verwendet werden, wobei $C$ die Gesamtkapazität des Batteriespeichers bezeichnet. Insbesondere ist es daher nicht erforderlich, dass die Summe aus erster und zweiter Teilkapazität gleich der Gesamtkapazität ist. Es ist zunächst lediglich sicherzustellen, beispielsweise über eine Nebenbedingung, dass die Summe der Teilkapazitäten kleiner oder gleich der Gesamtkapazität ist. Dies bedeutet äquivalent, dass die Summe der Ladezustände kleiner oder gleich dem Gesamtladezustand ist.

Eine Erneuerbaren-Energie-Gemeinschaft umfasst typischerweise mehrere Energiesysteme, beispielsweise Haushalte, Bürogebäude, industrielle Anlagen und/oder öffentliche Einrichtungen, beispielsweise Schulen und/oder Hochschulen, die untereinander lediglich bezüglich der Erneuerbaren-Energie-Gemeinschaft intern erneuerbar erzeugten Strom (Grünstrom) austauschen dürfen. Somit können Erneuerbare-Energie-Gemeinschaften selbst erzeugte erneuerbare Energie gemeinschaftlich nutzen, das heißt erzeugen, verbrauchen, speichern und/oder verkaufen.

Aus struktureller Sicht definiert insbesondere der IPCC Fifth Assessment Report ein Energiesystem als: "Alle Komponenten, die sich auf die Erzeugung, Umwandlung, Lieferung und Nutzung von Energie beziehen" (Annex I, Seite 1261).

Energiesysteme umfassen typischerweise mehrere Komponenten, insbesondere energietechnische Anlagen, beispielsweise Energiewandlungsanlagen, Verbrauchsanlagen und/oder Speicheranlagen. Energiesysteme können hierbei grundsätzlich mehrere Energieformen erzeugen und/oder bereitstellen.

Als Anlagen können die Energiesysteme eine oder mehrere der folgenden Komponenten umfassen: Stromgeneratoren, Kraftwärmekopplungsanlagen, insbesondere Blockheizkraftwerke, Gasboiler, Dieselgeneratoren, Wärmepumpen, Ladestationen für elektrische Fahrzeuge, Kompressionskältemaschinen, Absorptionskältemaschinen, Pumpen, Fernwärmenetzwerke, Energietransferleitungen, Windkrafträder oder Windkraftanlagen, Photovoltaikanlagen, Batteriespeicher, Biomasseanlagen, Biogasanlagen, Müllverbrennungsanlagen, industrielle Anlagen, konventionelle Kraftwerke und/oder dergleichen.

Grünstrom ist innerhalb der Erneuerbaren-Energie-Gemeinschaft erneuerbar erzeugter Strom, beispielsweise durch Photovoltaikanlagen. Grünstrom wird vom erzeugenden Energiesystem selbst verwendet oder für weitere Energiesysteme der Erneuerbaren-Energie-Gemeinschaft bereitgestellt. Mit anderen Worten wird Grünstrom innerhalb der Erneuerbaren-Energie-Gemeinschaft ausgetauscht. Insbesondere wird Grünstrom nicht durch einen bezüglich der Erneuerbaren-Energie-Gemeinschaft externen Erzeuger bereitgestellt, sondern von den Energiesystemen (Teilnehmern) der Erneuerbaren-Energie-Gemeinschaft selbst, deren Hauptaufgabe gerade nicht in der Energieerzeugung liegt.

Graustrom ist nicht erneuerbar erzeugter Strom oder gemischt erneuerbar und nicht-erneuerbar erzeugter Strom, dessen Anteil von erneuerbaren und nicht-erneuerbaren Quellen typischerweise unbekannt ist, und der insbesondere von Erzeugern außerhalb der Erneuerbaren-Energie-Gemeinschaft bezogen wird. Typischerweise wird Graustrom durch konventionelle Kraftwerke bereitgestellt und über ein öffentliches Stromnetz zu den Verbrauchern transportiert.

Zur Steuerung der Energieaustausche beziehungsweise Stromaustausche innerhalb der Erneuerbaren-Energie-Gemeinschaft ist somit eine bezüglich der Erneuerbaren-Energie-Gemeinschaft zentrale Steuerung der Energieaustausche erforderlich, die durch die erfindungsgemäß vorgesehene Steuereinheit ausgebildet wird.

Die Steuereinheit ist wenigstens dazu ausgebildet, den Batteriespeicher mittels Sollwerten für Ladeleistung beziehungsweise Entladeleistung zu steuern. Hierbei kann eine mittelbare oder unmittelbare Steuerung vorgesehen sein. Beispielsweise weist der Batteriespeicher eine lokale Steuereinheit auf, die den Batteriespeicher unmittelbar steuert, beziehungsweise regelt. Die zentrale Steuereinheit übermittelt dann die berechneten Sollwerte an die lokale Steuereinheit, die diese entsprechend umsetzt beziehungsweise einstellt. Dadurch wird eine mittelbare Steuerung des Batteriespeichers durch die zentrale Steuereinheit ausgebildet.

Weiterhin kann die Steuereinheit eine zentrale Aggregationseinheit für die Erneuerbare-Energie-Gemeinschaft ausbilden.

Ein computergestütztes Optimierungsverfahren im Sinne der vorliegenden Erfindung ist ein Verfahren zur Minimierung oder Maximierung einer Zielfunktion. Die Minimierung beziehungsweise Maximierung der Zielfunktion ist typischerweise äußerst komplex und kann daher lediglich numerisch, das heißt computergestützt, erfolgen. Die Zielfunktion charakterisiert hierbei eine Eigenschaft oder eine technisch Größe der Erneuerbaren-Energie-Gemeinschaft, beispielsweise die Kohlenstoffdioxidemissionen oder die Gesamtkosten. Typischerweise wird kein exaktes Minimum oder Maximum der Zielfunktion erreicht, sondern es ist ausreichend diesem, beispielsweise durch ein Festlegen eines Schwellenwertes (Abbruchbedingung), nahe zu kommen.

Durch das Optimierungsverfahren werden die für die Steuerung erforderlichen Sollwerte berechnet. Hierbei bilden die Sollwerte die Variablen der Zielfunktion aus, die durch das Minimieren oder Maximieren der Zielfunktion in ihren numerischen Werten bestimmt werden.

Für das erfindungsgemäße Verfahren kann somit grundsätzlich jede mögliche Zielfunktion verwendet werden, die die Ladeleistungen und/oder Entladeleistungen des Batteriespeichers als Variablen umfasst.

Weiterhin erfolgt die Optimierung typischerweise unter einer Berücksichtigung mehrerer Nebenbedingungen. Nebenbedingungen, Randbedingungen oder Zwangsbedingungen - hier zusammenfassend als Nebenbedingungen bezeichnet - sind typischerweise technische und/oder physikalische Bedingungen, Eigenschaften und/oder Relationen, die Parameter und/oder Variablen des Optimierungsverfahrens erfüllen müssen. Diese können als Gleichung und/oder Ungleichung gegeben sein, und/oder explizit eine Menge von zulässigen Werten von Parametern und/oder zulässigen Werten der Variablen beschreiben.

Gemäß der vorliegenden Erfindung wird die Gesamtkapazität des Batteriespeichers innerhalb des Optimierungsverfahrens in eine erste und zweite Teilkapazität eingeteilt. Hierbei ist die Einteilung in die zwei Teilkapazitäten virtuell, das heißt das Optimierungsverfahren umfasst bezüglich der Teilkapazitäten zwei Variablen, eine für Grünstrom und eine für Graustrom. Hierbei ist die erste Teilkapazität für Grünstrom und die zweite Teilkapazität für Graustrom vorgesehen. Mit anderen Worten kennzeichnet die erste Teilkapazität den Grünstromanteil und die zweite Teilkapazität den Graustromanteil innerhalb des Batteriespeichers.

Grundsätzlich besteht eine physikalisch zwingende Abhängigkeit für die Änderungen der Teilkapazitäten und den entsprechenden Ladeleistungen und/oder Entladeleistungen des Batteriespeichers, wobei Grünstrom und Graustrom jeweils eine eigene Ladeleistung und eine Entladeleistung aufweisen. Mit anderen Worten sind die Ladeleistungen und Entladeleistungen mit den Teilkapazitäten gekoppelt, sodass die durch das Verfahren geforderten Nebenbedingungen an die zweite Teilkapazität eine unmittelbare Rückwirkung auf die Ladeleistungen beziehungsweise Entladeleistungen aufweist, die als Sollwerte berechnet werden.

Erfindungsgemäß ist innerhalb des Optimierungsverfahrens wenigstens eine Nebenbedingung für die zweite Teilkapazität vorgesehen, nämlich, dass die zweite Teilkapazität beim Optimierungsverfahren durch einen Schwellenwert begrenzt wird, der durch ein Entladen innerhalb eines Zeitbereiches unter Berücksichtigung einer festgelegten Entladeleistungsgrenze und einer festgelegten minimalen zweiten Teilkapazität maximal erreichbar ist. Diese Bedingung beziehungsweise Nebenbedingung hat einen unmittelbaren Einfluss auf die berechneten Sollwerte der Ladeleistungen und Entladeleistungen.

Durch die erfindungsgemäß vorgesehene Nebenbedingung wird sichergestellt, dass der Graustromanteil innerhalb des Batteriespeichers möglichst klein ist, jedoch ein bestimmter minimaler Anteil des Graustroms, der durch die festgelegte minimalen zweiten Teilkapazität gekennzeichnet ist, innerhalb des Batteriespeichers, beispielsweise als Reserve, gespeichert bleibt. Hierbei erzwingt diese, dass innerhalb des Zeitbereiches, beispielsweise am Ende jeden Tages, ein Ausspeichern des Graustroms aus der Batterie und ein Einspeisen der entsprechenden elektrischen Energie in das elektrische Netz erfolgt, wenn der Graustrom selbst nicht genutzt werden kann.

Weiterhin stellt die erfindungsgemäße Bedingung technisch sicher, dass der Graustromanteil möglichst klein ist, das heißt, soweit technisch eben möglich minimiert wird. Diese technische Grenze ist durch die festgelegte Entladeleistungsgrenze gekennzeichnet.

Mit anderen Worten kann der Batteriespeicher innerhalb des festgelegten Zeitbereiches lediglich mit einer maximalen Leistung entladen werden und somit lediglich ein minimaler Graustromanteil, der grundsätzlich auch Null sein kann, erreicht werden.

Liegt der im genannten Sinne technisch erreichbare Graustromanteil oberhalb der festgelegten minimalen zweiten Teilkapazität, so ist die zweite Teilkapazität durch diesen bestimmt.

Liegt der technisch erreichbare Graustromanteil unterhalb der festgelegten minimalen zweiten Teilkapazität, so kann zwar grundsätzlich technisch ein kleinerer Graustromanteil erreicht werden, dies ist jedoch im Hinblick auf eine Reserve nicht sinnvoll, sodass in diesem Fall die zweite Teilkapazität durch den Wert der minimalen zweiten Teilkapazität begrenzt ist. Grundsätzlich kann jedoch auf eine solche Graustromreserve verzichtet werden und die minimale zweite Teilkapazität auf den Wert Null festgelegt werden.

Zusammenfassend stellt die erfindungsgemäß geforderte Bedingung an die zweite Teilkapazität technisch sicher, dass soweit technisch möglich und soweit technisch sinnvoll, der Graustromanteil innerhalb des Batteriespeichers möglichst minimiert wird. Dadurch wird der Grünstromanteil möglichst wenig durch Graustrom blockiert, sodass mehr Flexibilität innerhalb der Erneuerbaren-Energie-Gemeinschaft bereitgestellt und verwendet werden kann.

Es erfolgt somit eine herkunftsbasierte Partitionierung des Batteriespeichers in synergetischer Verwendung einer weiteren Nebenbedingung (Speicherrandbedingung) innerhalb des Optimierungsverfahrens beziehungsweise des Optimierungsmodells, bei welcher innerhalb des Zeitbereiches, insbesondere innerhalb regelmäßiger zeitlicher Abstände, ein maximaler Speicherfüllstand der zwei Teilkapazitäten definiert wird.

Die Erfindung weist insbesondere die folgenden Vorteile auf:

- Es wird eine höhere Flexibilität für erneuerbare Energie in der erneuerbaren Energiegemeinschaft ermöglicht, da die vorhandene Flexibilität von Batteriespeichern nicht durch eingespeicherten Graustrom blockiert wird, der nicht in der Gemeinschaft gehandelt werden darf.

- Durch die bereitgestellte Flexibilität kann eine verbesserte lokale Integration von Energie aus erneuerbaren Quellen erreicht und die Abregelung von erneuerbaren Energien verhindert werden. Das erfindungsgemäße Verfahren trägt damit zu einem nachhaltigeren Betrieb der erneuerbaren Energiegemeinschaft bei.

- Die Grünstrom-Partition (erste Teilkapazität) könnte als zusätzlicher Vorteil für die Energiegemeinschaft als "verlustfrei" gekennzeichnet werden, beispielsweise unter Verwendung von Graustrom für die Speicherverluste. Somit könnte der gesamte, lokal erzeugte Grünstrom auch wieder in der erneuerbaren Energiegemeinschaft zeitversetzt genutzt werden. Verluste werden dann aus dem Graustromanteil gedeckt, der dann nicht ausgespeichert werden müsste.

- Durch kontrolliertes Ausspeichern von Graustrom in den Erweiterungen und Einspeisen in das elektrische Netz könnten bei Berücksichtigung von $CO_2$-Fussabdrücken und eines Preises des Strommixes, teure und $CO_2$-intensive Erzeuger verdrängt werden. Dadurch wird die ökologische und ökonomische Komponente eines nachhaltigen Betriebs der Energiesysteme adressiert.

- Die erneuerbare Energiegemeinschaft kann durch höhere Flexibilität besser und effektiver Netzdienstleistungen, wie beispielsweise Peak-Shaving, erbringen. Dadurch kann der Ausbau von Netzinfrastruktur und der damit verbundene $CO_2$-Fußabruck reduziert und die Nachhaltigkeit erhöht werden.

Die erfindungsgemäße Steuereinheit zum Betrieb eines Batteriespeichers innerhalb einer Erneuerbaren-Energie-Gemeinschaft, wobei die Erneuerbare-Energie-Gemeinschaft mehrere Energiesysteme umfasst, die dazu ausgebildet sind, Grünstrom untereinander auszutauschen, sowie Graustrom selbst zu verwenden und/oder für bezüglich der Erneuerbaren-Energie-Gemeinschaft externe Energiesysteme bereitzustellen, ist dazu ausgebildet, basierend auf einem computergestützten Optimierungsverfahren Sollwerte für Ladeleistungen und/oder Entladeleistungen des Batteriespeichers zu berechnen, und den Batteriespeicher entsprechend den berechneten Sollwerten zu steuern. Die erfindungsgemäße Steuereinheit ist dadurch gekennzeichnet, dass diese dazu ausgebildet ist, beim Optimierungsverfahren die Gesamtkapazität des Batteriespeichers in eine erste und zweite Teilkapazität $C_{1,t}$, $C_{2,t}$ einzuteilen, wobei die erste Teilkapazität $C_{1,t}$ für Grünstrom und die zweite Teilkapazität $C_{2,t}$ für Graustrom vorgesehen ist, und die zweite Teilkapazität $C_{2,t}$ beim Optimierungsverfahren durch einen Schwellenwert $C_{2,limit,T}$ begrenzt ist, der durch ein Entladen innerhalb eines Zeitbereiches $T$ unter Berücksichtigung einer festgelegten Entladeleistungsgrenze $P_{max}$ und einer festgelegten minimalen zweiten Teilkapazität $C_{2,0}$ maximal erreichbar ist.

Die erfindungsgemäße Steuereinheit kann zur Durchführung des numerischen Optimierungsverfahrens beziehungsweise der Optimierung eine entsprechend ausgestaltete und eingerichtete Recheneinheit umfassen.

Es ergeben sich zum erfindungsgemäßen Verfahren gleichartige, gleichwertige und gleichwirkende Vorteile und/oder Ausgestaltungen der erfindungsgemäßen Steuereinheit.

Die erfindungsgemäße Erneuerbare-Energie-Gemeinschaft, umfasst mehrere Energiesysteme, die dazu ausgebildet sind, Grünstrom untereinander auszutauschen, sowie Graustrom selbst zu verwenden und/oder für bezüglich der Erneuerbaren-Energie-Gemeinschaft externe Energiesysteme bereitzustellen, und ist dadurch gekennzeichnet, dass die Erneuerbare-Energie-Gemeinschaft eine Steuereinheit gemäß der vorliegenden Erfindung und/oder einer ihrer Ausgestaltungen umfasst.

Es ergeben sich zum erfindungsgemäßen Verfahren sowie zur erfindungsgemäßen Steuereinheit gleichartige, gleichwertige und gleichwirkende Vorteile und/oder Ausgestaltungen der erfindungsgemäßen Erneuerbare-Energie-Gemeinschaft.

Gemäß einer vorteilhaften Ausgestaltung der Erfindung wird beim Optimierungsverfahren die Nebenbedingung $C_{2,te} \leq C_{2,limit,T}$ mit $C_{2,limit,T}$ = max $(C_{2,min,te}, C_{2,0})$ verwendet, wobei $C_{2,min,te}$ = $C_{2,ti}$ - $T \cdot P_{max}$ und $T = [t_i, t_e]$ ist.

Mit anderen Worten wird beim Optimierungsverfahren die Nebenbedingung $C_{2,te} \leq$ max $(C_{2,min,te}, C_{2,0})$ verwendet, wobei $C_{2,min,te}$ = $C_{2,ti}$ - $T \cdot P_{max}$ ist und $C_{2,ti}$ die zweite Teilkapazität bei Beginn des Entladens und $C_{2,ti}$ die zweite Teilkapazität bei Ende des Entladens bezeichnet.

Äquivalent hierzu wird die Nebenbedingung $SoC_{2,te} \leq SoC_{2,limit,T}$ mit $SoC_{2,limit,T}$ = max $(SOC_{2,min,te}, SoC_{2,0})$ verwendet, wobei $SoC_{2,min,te}$ = $SoC_{2,ti.}$ - $T \cdot P_{max}/C$ ist und $SoC_{2,ti}$ den zweiten Ladezustand bei Beginn des Entladens des Batteriespeichers und $SoC_{2,te}$ den zweiten Ladezustand am Ende des Entladens des Batteriespeichers bezeichnet.

Mit anderen Worten wird die für die zweite Teilkapazität erfindungsgemäß geforderte Bedingung als Nebenbedingung beim Optimierungsverfahren werden. Hierbei stellt die Nebenbedingung $C_{2,te} \leq$ max $(C_{2,min,te}, C_{2,0})$ sicher, dass die technischen Rahmenbedingungen (maximale Entladeleistung $P_{max}$ und minimaler Graustromanteil $C_{2,0}$) berücksichtigt werden und kein technisch nicht möglicher oder nicht vorteilhafter Graustromanteil (zweite Teilkapazität) berechnet wird.

Ist der technisch maximal erreichbare minimale zweite Ladezustand $C_{2,min,te}$ kleiner als der festgelegte minimale Ladezustand $SoC_{2,0}$ für den Graustrom, so wird bei der Optimierung $SoC_{2,te} \leq SoC_{2,0}$ gefordert. Ist der technisch maximale erreichbare minimale zweite Ladezustand $C_{2,min,te}$ größer als der festgelegte minimale Ladezustand $SoC_{2,0}$ für den Graustrom, so wird bei der Optimierung $SoC_{2,t_e} \leq C_{2,min,t_e}$ gefordert.

In einer vorteilhaften Weiterbildung der Erfindung wird die Entladeleistungsgrenze $P_{max}$ durch eine anlagen-spezifische maximale Leistung des Batteriespeichers oder durch eine maximale Leistung eines Netzanschlusspunktes der Erneuerbaren-Energie-Gemeinschaft festgelegt.

Mit anderen Worten kann die Entladeleistungsgrenze, das heißt die maximale Entladeleistung, die zum Entladen des Batteriespeichers, insbesondere des Graustroms, verwendet werden kann, durch den Batteriespeicher oder durch den Netzanschlusspunkt der Erneuerbaren-Energie-Gemeinschaft begrenzt sein.

Hierbei bezieht sich die Leistung am Netzanschlusspunkt, der typischerweise ebenfalls virtuell ist, auf die über die Erneuerbaren-Energie-Gemeinschaft aggregierte Leistung. Würde beispielsweise die Entladung des Batteriespeichers mit seiner maximal zulässigen Entladeleistung zu einer Verletzung der Betriebsgrenzen der Erneuerbaren-Energie-Gemeinschaft, beispielsweise der am Netzanschluss aggregierten Leistung, führen, dann wird der Batteriespeicher nicht mit seiner maximalen Entladeleistung entladen, sondern mit der noch zulässigen Leistung, die zu keiner Verletzung der Betriebsgrenzen am Netzanschlusspunkt der Erneuerbaren-Energie-Gemeinschaft führt. Sind hingegen die Betriebsgrenzen am Netzanschlusspunkt nicht verletzt, so kann mit der für den Batteriespeicher maximal zulässigen Entladeleistung entladen werden. Hierbei kann grundsätzlich die maximale Entladeleistung für das Entladen des Batteriespeichers von der maximal zulässigen Ladeleistung des Batteriespeichers verschieden sein.

Gemäß einer vorteilhaften Ausgestaltung der Erfindung umfasst der festgelegte Zeitbereich $T$ einen oder mehrere Zeitschritte des Optimierungsverfahren.

Typischerweise werden für die zeitlichen Abhängigkeiten diskrete Zeitschritte verwendet. Mit anderen Worten wird der durch das Optimierungsverfahren umfasste Zeitbereich für das numerische Lösen des Optimierungsproblems in diskrete Zeitschritte eingeteilt. Beispielsweise wird ein Tag in Stunden oder 15 Minuten Zeitschritte unterteilt. Somit umfasst der festgelegte Zeitbereich, der für das Entladen des Graustroms vorgesehen ist, einen oder mehrere der genannten Zeitschritte. Somit ist beispielsweise $T = t_e - t_i$ ein ganzzahliges Vielfaches von $\Delta t$, wobei $\Delta t$ die Zeitschritte beziehungsweise die Zeitschrittweite kennzeichnet.

In einer vorteilhaften Weiterbildung der Erfindung wird die Entladeleistungsgrenze $P_{max}$ durch eine mittlere Leistung von vom Zeitschritt abhängigen maximalen Entladeleistungen ausgebildet.

Mit anderen Worten ist $P_{max} = \sum_{t \in T} P_{max,t}/n$, wenn $n$ die Anzahl der zeitabhängigen Entladeleistungen beziehungsweise die Anzahl der betrachteten Zeitschritte kennzeichnet. Somit ist insbesondere $SoC_{2,min,te} = SoC_{2,t0} - (t_e - t_i)/(n \cdot C) \sum_{t \in T} P_{max,t}$. Dadurch wird ein netzdienliches und kontrolliertes Ausspeichern des Graustroms ohne Verletzung Betriebsgrenzen der Erneuerbaren-Energie-Gemeinschaft zusätzlich zeitlich sichergestellt.

Gemäß einer vorteilhaften Ausgestaltung der Erfindung umfasst der festgelegte Zeitbereich lediglich den letzten Zeitschritt des Optimierungsverfahrens.

Dadurch wird der Graustrom vorteilhafterweise lediglich im letzten Zeitschritt des beim Optimierungsverfahren betrachteten Zeitbereiches entladen. Beispielsweise wird im letzten Simulationsschritt jedes Tages, typischerweise am Abend beziehungsweise in der Nacht, der Graustrom entladen. Vorteilhafterweise bleibt jedoch durch die erfindungsgemäß vorgesehene minimale Grenze $C_{2,0}$ stets ein minimaler Rest an Graustrom innerhalb des Batteriespeichers gespeichert, die als Reserve, gerade in den Abendstunden, verwendet werden kann. Dennoch wird erfindungsgemäß noch ausreichend Flexibilität bereitgestellt.

In einer vorteilhaften Weiterbildung der Erfindung werden Verluste bei der Speicherung des Grünstroms durch den mittels der zweiten Teilkapazität gespeicherten Graustroms ausgeglichen.

Mit anderen Worten wird ein verlustfreies Speichern beziehungsweise Zwischenspeichern des Grünstroms innerhalb der Erneuerbaren-Energie-Gemeinschaft ermöglicht, wobei die Verluste, die stets beim Speichern einer Strommenge auftreten, durch den gespeicherten Graustrom gedeckt werden. Auch aus diesem Grunde ist es vorteilhaft, stets einen festgelegten minimalen Graustromanteil gespeichert zu haben. Mit anderen Worten wird beim Ausspeichern des Grünstroms dann eine, den Ausspeicherverlusten entsprechende Energiemenge, aus der Graustrompartition entnommen, sodass am Ende der gesamte ursprüngliche Grünstrommenge für einen oder mehrere Nutzer (Energiesysteme) innerhalb der erneuerbaren Energiegemeinschaft bereitgestellt werden kann.

Weiterhin könnte die Steuerung durch die Steuereinheit ein Konvertieren von Grünstrom zu Graustrom ermöglichen. Das ist beispielsweise dann vorteilhaft, wenn Überschussstrom von einer oder mehrerer Photovoltaikanlagen weder vom Teilnehmer (Energiesystem) selbst noch in der erneuerbaren Energiegemeinschaft genutzt werden kann. Dadurch wird in der bereits vollständig gefüllten Batterie in gleichem Maße Energie von der virtuellen Graustrom- zur Grünstrompartition verschoben, falls zu diesem Zeitpunkt Graustrom in der Batterie gespeichert ist. Mit anderen Worten wird in diesem Fall Grünstrom in der Batterie zwischengespeichert und Graustrom ins Netz zurückgespeist.

Falls zu diesem Zeitpunkt weniger Energie in der virtuellen Graustrompartition ist, als von der Kategorie Grünstrom zu Graustrom konvertiert wurde, so wird die gesamte Energie in der Graustrompartition zur Grünstrompartition verschoben und der Rest an Grünstrom kann dann als Grünstrom ins Netz zurückgespeist werden. Dieses vorteilhafte Verfahren verhindert gleichzeitiges, verlustbehaftetes Einspeichern von Grünstrom und Ausspeichern von Graustrom.

Gemäß einer vorteilhaften Ausgestaltung der Erfindung wird beim Optimierungsverfahren der Batteriespeicher derart modelliert, dass für das Berechnen der Sollwerte der Ladeleistungen und/oder Entladeleistungen die jeweiligen Wirkungsgrade $\eta_{chr}$, $\eta_{dch}$ berücksichtigt werden.

Mit anderen Worten weisen Batteriespeicher typischerweise für ihr Beladen und Entladen unterschiedliche Wirkungsgrade auf. Vorteilhafterweise werden diese verschiedenen Wirkungsgrade dann ebenfalls beim Optimierungsverfahren berücksichtigt.

In einer vorteilhaften Weiterbildung der Erfindung werden beim Optimierungsverfahren die Nebenbedingungen

$dC_{1/2,t}/dt = \eta_{ch} \cdot P^{ch}_{1/2,t} - P^{dch}_{1/2,t}/\eta_{dch}$ verwendet, wobei $P^{ch}_{1/2,t}$ die Sollwerte der Ladeleistung für die erste und zweite Teilkapazität und $P^{dch}_{1/2,t}$ die Sollwerte der Entladeleistung für die erste und zweite Teilkapazität bezeichnen.

Vorteilhafterweise werden dadurch ebenfalls die für das Laden und Entladen des Batteriespeichers gegebenenfalls verschiedene Wirkungsgrade berücksichtigt.

Hierbei bezeichnet $dC_{1/2,t}/dt$ die zeitliche Änderung der jeweiligen Teilkapazität, die durch ein Laden ( $\eta_{ch} \cdot P^{ch}_{1/2,t}$ ) oder Entladen ( $P^{dch}_{1/2,t}/\eta_{dch}$ ) des Batteriespeichers erfolgt.

Die Nebenbedingung $dC_{1/2,t}/dt = \eta_{ch} \cdot P^{ch}_{1/2,t} - P^{dch}_{1/2,t}/\eta_{dch}$ stellt zudem die physikalische Kopplung zwischen den Sollwerten für die Ladeleistungen ( $P^{ch}_{1/2,t}$ ) und Entladeleistungen ( $P^{dch}_{1/2,t}$ ) sicher. Werden diskrete Zeitschritte für das numerische Lösen des Optimierungsproblems verwendet, dann wird die Nebenbedingung $(C_{1/2,t} - C_{1/2,t-1})/\Delta t = \eta_{ch} \cdot P^{ch}_{1/2,t} - P^{dch}_{1/2,t}/\eta_{dch}$ beziehungsweise $C \cdot (SoC_{1/2,t} - SoC_{1/2,t-1})/\Delta t = \eta_{ch} \cdot P^{ch}_{1/2,t} - P^{dch}_{1/2,t}/\eta_{dch}$ für alle $t$ des betrachteten Optimierungszeitraums verwendet.

In dem Fall, dass die diskrete Nebenbedingung $C \cdot (SoC_{1/2,t} - SoC_{1/2,t-1})/\Delta t = \eta_{ch} \cdot P^{ch}_{1/2,t} - P^{dch}_{1/2,t}/\eta_{dch}$ verwendet wird, wird ebenfalls die diskrete Bedingung $SoC_{2,te} \leq \max (SoC_{2,min,t_e}, SoC_{2,0})$ verwendet, wobei $SoC_{2,min,t_e} = SoC_{2,t_0} - (t_e - t_i) \cdot P_{max}/C$ ist.

Gemäß einer vorteilhaften Ausgestaltung der Erfindung wird der Zeitbereich derart festgelegt, dass ein Entladen der zweiten Teilkapazität dann erfolgt, wenn der der Erneuerbaren-Energie-Gemeinschaft übergeordnete Strommix einen $CO_2$-Fußabdruck oberhalb eines Emissionsschwellenwertes aufweist.

Mit anderen Worten wird unter einer Berücksichtigung des aktuellen $CO_2$-Fußabdruckes (englisch: $CO_2$-Footprint) des Strommixes, die Ausspeicherung in eine Zeit mit hohen $CO_2$-Emissionen verschoben, sodass $CO_2$-intensive Erzeuger verdrängt werden. Eine Ausspeicherung zu einer Zeit mit geringen $CO_2$-Emissionen könnte hingegen nachteilig dazu führen, dass Strom aus erneuerbaren Quellen abgeregelt werden müsste. Hierzu können beispielsweise Informationen über die $CO_2$-Intensität des Strommixes in einen internen Preis umgewandelt werden, der in die Zielfunktion des Optimierungsproblems einfließt.

Weiterhin kann unter einer Berücksichtigung des aktuellen Strompreises, die Ausspeicherung in eine Zeit mit hohen Preisen verschoben werden, sodass Erzeuger mit hohen Stromgestehungskosten verdrängt werden. Dies kann ebenfalls zu einem Ausgleich von Strompreisspitzen beitragen. Hierzu können Informationen über den aktuellen Strompreis in einen internen Preis umgewandelt werden, der in die Zielfunktion des Optimierungsproblems einfließt.

In einer vorteilhaften Weiterbildung der Erfindung ist die Steuereinheit dazu ausgebildet, weitere energietechnische Anlagen innerhalb der Erneuerbaren-Energie-Gemeinschaft zu steuern.

Mit anderen Worten bildet die Steuereinheit vorteilhafterweise eine bezüglich der Erneuerbaren-Energie-Gemeinschaft zentrale Steuereinheit aus. Hierbei steuert diese nicht nur den Batteriespeicher, sondern ebenfalls weitere energietechnische Anlagen der Erneuerbaren-Energie-Gemeinschaft, insbesondere Erzeuger, beispielsweise Photovoltaikanlagen, und/oder steuerbare Lasten, beispielsweise Wärmepumpen.

Gemäß einer vorteilhaften Ausgestaltung der Erfindung ist die Steuereinheit dazu ausgebildet, die Stromaustausche zwischen den Energiesystemen der Erneuerbaren-Energie-Gemeinschaft zu steuern.

Dadurch bildet die Steuereinheit vorteilhafterweise für alle Stromaustausche zwischen den Energiesystemen der Erneuerbaren-Energie-Gemeinschaft eine zentrale Steuereinheit beziehungsweise Steuervorrichtung aus.

In einer vorteilhaften Weiterbildung der Erfindung ist die Steuereinheit weiterhin dazu ausgebildet, die Steuerung der Stromaustausche zwischen den Energiesystemen derart zu steuern, dass lediglich Grünstrom zwischen den Energiesystemen ausgetauscht wird.

Dadurch ist vorteilhafterweise sichergestellt, dass lediglich Grünstrom, das heißt kein Graustrom, unter den Energiesystemen der Erneuerbaren-Energie-Gemeinschaft ausgetauscht wird.

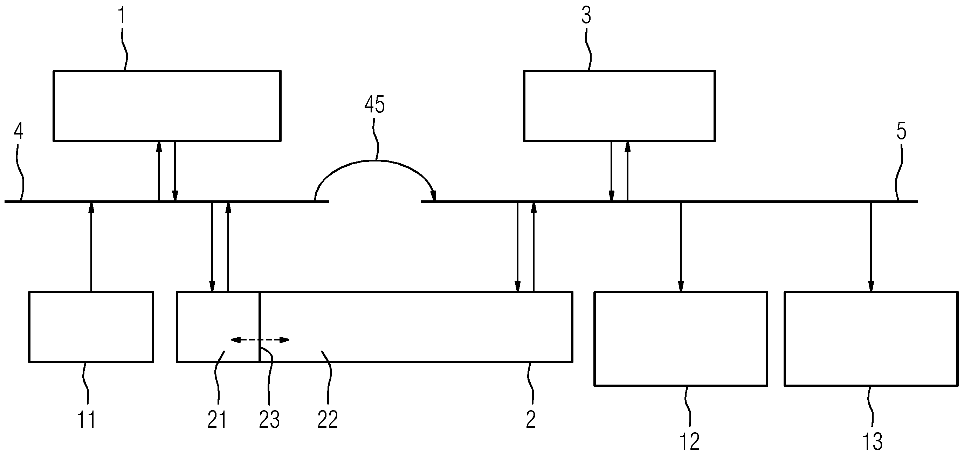

Weitere Vorteile, Merkmale und Einzelheiten der Erfindung ergeben sich aus den im Folgenden beschriebenen Ausführungsbeispielen sowie anhand der Zeichnung. Dabei zeigt die Figur schematisiert ein Modell (Teilnehmermodell) einer Erneuerbaren-Energie-Gemeinschaft mit wenigstens einem Batteriespeicher.

Gleichartige, gleichwertige oder gleichwirkende Elemente können in der Figur mit denselben Bezugszeichen versehen sein.

Die Figur zeigt ein sogenanntes Teilnehmermodell einer Erneuerbaren-Energie-Gemeinschaft 1, das die grundsätzlichen Abhängigkeiten bezüglich der Stromaustausche verdeutlicht. Hierbei sind in der Figur mögliche Stromaustausche beziehungsweise Energieaustausche mit Pfeilen gekennzeichnet.

Eine Steuereinheit, die die genannten Stromaustausche steuert, sowie die einzelnen Energiesysteme (Teilnehmer) sind aus Gründen der Übersicht in der Figur nicht dargestellt.

Die Steuereinheit steuert basierend auf einer numerischen, das heißt computergestützten Optimierung, die Energieaustausche zwischen den Energiesystemen der Erneuerbaren-Energie-Gemeinschaft und einem bezüglich der Energiegemeinschaft übergeordneten Stromnetz 3.

Die Erneuerbaren-Energie-Gemeinschaft 1 umfasst mehrere Energiesysteme, die Grünstrom 4 untereinander austauschen können. Weiterhin kann der Grünstrom mittels wenigstens eines Batteriespeichers 2 der Erneuerbaren-Energie-Gemeinschaft 1 gespeichert beziehungsweise zwischengespeichert werden.

Für den Betrieb einer Erneuerbaren-Energie-Gemeinschaft 1 wird Grünstrom 4 und Graustrom 5 unterschieden.

Grünstrom 4 ist innerhalb der Erneuerbaren-Energie-Gemeinschaft 1 erneuerbar erzeugter Strom.

Graustrom 5 ist hingegen nicht durch die Erneuerbaren-Energie-Gemeinschaft 1 erneuerbar erzeugt, sondern wird typischerweise bezüglich der Erneuerbaren-Energie-Gemeinschaft 1 extern bezogen.

Mit anderen Worten wird Grünstrom 4 über die Energiegemeinschaft 1 ausgetauscht. Graustrom 4 kann über das elektrische Netz 3 bezogen oder eingespeist werden. Ein Überschuss an Grünstrom 4, der nicht selbst oder in der Energiegemeinschaft 1 genutzt wird, kann intern in Graustrom 5 konvertiert werden (Pfeil 45) und in das Netz eingespeist werden.

Die Erneuerbaren-Energie-Gemeinschaft 1 beziehungsweise die Energiesysteme der Erneuerbaren-Energie-Gemeinschaft 1 weisen weitere energietechnische Anlagen auf, die in Erzeuger 11, beispielsweise Photovoltaikanlagen, in nicht steuerbare Lasten 12, beispielsweise elektrische Grundlasten, und steuerbare Lasten 13, eingeteilt werden können.

Der Batteriespeicher 2 ermöglicht eine Speicherung beziehungsweise Zwischenspeicherung von Grünstrom 4 und/oder Graustrom 5.

Zur Herkunftsermittlung des Stroms (Grünstrom 4 oder Graustrom 5) wird der Batteriespeicher für die Optimierung, das heißt für die Steuerung seiner Ladeleistung und/oder Entladeleistung, durch die Steuereinheit in zwei Teilkapazitäten 21, 22 virtuell eingeteilt. Hierbei ist die erste Teilkapazität 21 für Grünstrom und die zweite Teilkapazität 22 für Graustrom vorgesehen. Die Teilkapazitäten 21, 22 sind nicht starr, sondern dynamisch, was in der Figur durch die verschiebbare Grenze 23 zwischen den Teilkapazitäten 21, 22 symbolisiert ist.

Für die Steuerung beziehungsweise Optimierung wird somit die Bilanzgleichung des Batteriespeichers 2 in die sogenannten Commodities $c \in C$, vorliegend Graustrom 4 und Grünstrom 5, eingeteilt. Hierbei wird sichergestellt, dass die Summe aus Graustrom 4 ($SoC_{1,t}$) und Grünstrom 5 ($SoC_{2,t}$) innerhalb der allgemeinen Speichergrenzen verbleibt. Mit andere Worten wird bei der Optimierung die Nebenbedingung $SoC_{min} \leq \sum_{c=1,2} SoC_{c,t} \leq SoC_{max}$ für alle betrachteten Zeitpunkte $t$ verwendet, wobei $SoC_{min}$ und $SoC_{max}$ die allgemeinen technischen Speichergrenzen bezeichnet.

Weiterhin wird sichergestellt, dass die Summe der commodityspezifischen Ladeleistungen ($P_{c,t}^{ch}$) und Entladeleistungen ($P_{c,t}^{dch}$) innerhalb den allgemeinen Leistungsgrenzen verbleibt. Dies wird durch die Nebenbedingungen $P_{min} \leq \sum_{c=1,2} P_{c,t}^{ch} \leq a_t \cdot P_{max}$ sowie $P_{min} \leq \sum_{c=1,2} P_{c,t}^{dch} \leq a_t \cdot P_{max}$ für alle betrachteten Zeitpunkte $t$ sichergestellt.

Die Kopplung der jeweiligen Ladezustände 21, 22 beziehungsweise Teilkapazitäten 21, 22 wird dann bei der Optimierung durch die Nebenbedingung $C \cdot (SoC_{1/2,t} - SoC_{1/2,t-1})/\Delta t = \eta_{ch} \cdot P_{1/2,t}^{ch} - P_{1/2,t}^{dch}/\eta_{dch}$ für alle betrachteten Zeitpunkte $t$ sichergestellt, wobei diskrete Zeitschritte $\Delta t$ verwendet werden und $C$ die Gesamtkapazität des Batteriespeichers 2 bezeichnet.

Für die zweite Teilkapazität 22 wird bei der Optimierung eine zusätzliche Nebenbedingung verwendet, die sicherstellt, dass der gespeicherte Graustrom 5, soweit wie technisch möglich und technisch sinnvoll, entladen wird. Hierbei ist die technisch mögliche Grenze durch einen Schwellenwert $SoC_{2,min,t_e}$ gekennzeichnet, während die technisch sinnvolle Grenze durch einen festgelegten minimalen Graustromanteil $SoC_{2,0}$ gekennzeichnet ist.

Technisch möglich ist eine Entladung des Batteriespeichers 2 innerhalb eines Zeitbereiches $T$ maximal mit einer Entladeleistungsgrenze $P_{max}$. Somit ist technisch maximal $SoC_{2,min,t_e} = SoC_{2,t_i} - (t_e - t_i) \cdot P_{max}/C$ und $T = [t_i, t_e]$ am Ende des Entladens (Zeitpunkt $t_e$) erreichbar. Allerdings soll, da dies technisch sinnvoll ist, beispielsweise als Reserve, ein minimaler Graustrom 5 im Batteriespeicher 2 verbleiben. Die genannten beiden technischen Bedingungen lassen sich somit zu $SoC_{2,te} \leq \max(SoC_{2,min,te}, SoC_{2,0})$ zusammenfassen.

Der zweite Ladezustand für genau den Zeitpunkt $t_e$ wird somit durch das Maximum des kleinsten SoC-Wertes, der unter Einhaltung der Entladeleistungsgrenzen erreicht werden kann, und des allgemein definierten Schwellenwerts für den minimalen Graustromanteil bestimmt.

Es wird somit bezüglich der Optimierung in regelmäßigen Abständen sichergestellt, vorliegend im letzten Simulationsschritt jedes Tages $t_e$, dass der commodity-spezifische SoC einer Speicherpartition, vorliegend des Graustroms 5, einen definierten Schwellenwert nicht übersteigt, damit ausreichend Flexibilität in der weiteren Partition 21 des Batteriespeichers 2 vorgehalten werden kann.

Die Ausspeicherung des Graustroms 5 stellt hierbei vorteilhafterweise mehr Flexibilität für die Erneuerbare-Energie-Gemeinschaft 1 bereit, da mehr Grünstrom 4 gespeichert beziehungsweise zwischengespeichert werden und von der Erneuerbare-Energie-Gemeinschaft 1 genutzt werden kann.

Allerdings verbleibt ein minimaler Anteil des Graustroms 5 stets im Batteriespeicher 5, der als Reserve verwendet werden kann.

Es wird somit insgesamt eine höhere Flexibilität für erneuerbare Energie in der Energiegemeinschaft 1 erreicht, da die vorhandene Flexibilität von Batteriespeichern 2 nicht durch eingespeicherten Graustrom 5 blockiert wird, der nicht in der Energiegemeinschaft 1 ausgetauscht werden darf.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

1    Erneuerbaren-Energie-Gemeinschaft
2    Batteriespeicher
3    Netzausspeisung/Netzeinspeisung
4    Grünstrom
5    Graustrom
11    Erzeuger
12    nicht steuerbare Lasten
12    steuerbare Lasten
21    erste Teilkapazität
22    zweite Teilkapazität
23    verschiebbare Grenze
45    Konvertierung von Grünstrom zu Graustrom

**Patentansprüche**

1. Verfahren zum Betrieb eines Batteriespeichers (2) innerhalb einer Erneuerbaren-Energie-Gemeinschaft (1), wobei die Erneuerbare-Energie-Gemeinschaft (1) mehrere Energiesysteme umfasst, die dazu ausgebildet sind, Grünstrom (4) untereinander auszutauschen, sowie Graustrom (5) selbst zu verwenden und/oder für bezüglich der Erneuerbaren-Energie-Gemeinschaft (1) externe Energiesysteme bereitzustellen, wobei zur Steuerung des Batteriespeichers (2) eine Steuereinheit verwendet wird, die dazu ausgebildet ist, basierend auf einem computergestützten Optimierungsverfahren Sollwerte für Ladeleistungen und/oder Entladeleistungen des Batteriespeichers (2) zu berechnen, wobei der Batteriespeicher (2) entsprechend den berechneten Sollwerten durch die Steuereinheit gesteuert wird, **gekennzeichnet dadurch, dass** beim Optimierungsverfahren die Gesamtkapazität $C$ des Batteriespeichers (2) in eine erste und zweite Teilkapazität $C_{1,t}$, $C_{2,t}$ (21, 22) eingeteilt wird, wobei die erste Teilkapazität $C_{1,t}$ (21) für Grünstrom (4) und die zweite Teilkapazität $C_{2,t}$ für Graustrom (5) vorgesehen ist, und die zweite Teilkapazität $C_{2,t}$ (22) beim Optimierungsverfahren durch einen Schwellenwert $C_{2,limit,T}$ begrenzt wird, der durch ein Entladen innerhalb eines Zeitbereiches $T$ unter Berücksichtigung einer festgelegten Entladeleistungsgrenze $P_{max}$ und einer festgelegten minimalen zweiten Teilkapazität $C_{2,0}$ (22) maximal erreichbar ist.

2. Verfahren gemäß Anspruch 1, **gekennzeichnet dadurch, dass** beim Optimierungsverfahren die Nebenbedingung $C_{2,te} \leq C_{2,limit,T}$ mit $C_{2,limit,T} = \max(C_{2,min,te}, C_{2,0})$ verwendet wird, wobei $C_{2,min,te} = C_{2,ti} - T \cdot P_{max}$ und $T = [t_i, t_e]$ ist.

3. Verfahren gemäß Anspruch 1 oder 2, **gekennzeichnet dadurch, dass** die Entladeleistungsgrenze $P_{max}$ durch eine

anlagenspezifische maximale Leistung des Batteriespeichers (2) oder durch eine maximale Leistung eines Netzanschlusspunktes der Erneuerbaren-Energie-Gemeinschaft (1) festgelegt wird.

4. Verfahren gemäß einem der vorhergehenden Ansprüche, **gekennzeichnet dadurch, dass** der festgelegte Zeitbereich $T$ einen oder mehrere Zeitschritte des Optimierungsverfahrens umfasst.

5. Verfahren gemäß Anspruch 4, **gekennzeichnet dadurch, dass** die Entladeleistungsgrenze $P_{max}$ durch eine mittlere Leistung von vom Zeitschritt abhängigen maximalen Entladeleistungen ausgebildet wird.

6. Verfahren gemäß Anspruch 4 oder 5, **gekennzeichnet dadurch, dass** der festgelegte Zeitbereich lediglich den letzten Zeitschritt des Optimierungsverfahrens umfasst.

7. Verfahren gemäß einem der vorhergehenden Ansprüche, **gekennzeichnet dadurch, dass** Verluste bei der Speicherung des Grünstroms (4) durch den mittels der zweiten Teilkapazität (22) gespeicherten Graustrom (5) ausgeglichen werden.

8. Verfahren gemäß einem der vorhergehenden Ansprüche, **gekennzeichnet dadurch, dass** beim Optimierungsverfahren der Batteriespeicher (2) derart modelliert wird, dass für das Berechnen der Sollwerte der Ladeleistungen und/oder Entladeleistungen die jeweiligen Wirkungsgrade $\eta_{chr}$, $\eta_{dch}$ berücksichtigt werden.

9. Verfahren gemäß Anspruch 8, **gekennzeichnet dadurch, dass** beim Optimierungsverfahren die Nebenbedingungen $dC_{1/2}/dt = \eta_{ch} \cdot P_{1/2,t}^{ch} - P_{1/2,t}^{dch}/\eta_{dch}$ verwendet werden, wobei $P_{1/2,t}^{ch}$ die Sollwerte der Ladeleistung für die erste und zweite Teilkapazität (21, 22) und $P_{1/2,t}^{dch}$ die Sollwerte der Entladeleistung für die erste und zweite Teilkapazität (21, 22) bezeichnen.

10. Verfahren gemäß einem der vorhergehenden Ansprüche, **gekennzeichnet dadurch, dass** der Zeitbereich derart festgelegt wird, dass ein Entladen der zweiten Teilkapazität (22) dann erfolgt, wenn der der Erneuerbaren-Energie-Gemeinschaft übergeordnete Strommix einen $CO_2$-Fußabdruck oberhalb eines Emissionsschwellenwertes aufweist.

11. Steuereinheit zum Betrieb eines Batteriespeichers (2) innerhalb einer Erneuerbaren-Energie-Gemeinschaft (1), wobei die Erneuerbare-Energie-Gemeinschaft (1) mehrere Energiesysteme umfasst, die dazu ausgebildet sind, Grünstrom (4) untereinander auszutauschen, sowie Graustrom (5) selbst zu verwenden und/oder für bezüglich der Erneuerbaren-Energie-Gemeinschaft (1) externe Energiesysteme bereitzustellen, wobei die Steuereinheit dazu ausgebildet ist, basierend auf einem computergestützten Optimierungsverfahren Sollwerte für Ladeleistungen und/oder Entladeleistungen des Batteriespeichers (2) zu berechnen, und den Batteriespeicher (2) entsprechend den berechneten Sollwerten zu steuern, **dadurch gekennzeichnet, dass** die Steuereinheit dazu ausgebildet ist, beim Optimierungsverfahren die Gesamtkapazität des Batteriespeichers (2) in eine erste und zweite Teilkapazität $C_{1,t}$, $C_{2,t}$ (21, 22) einzuteilen, wobei die erste Teilkapazität $C_{1,t}$ (21) für Grünstrom (4) und die zweite Teilkapazität $C_{2,t}$ (22) für Graustrom (5) vorgesehen ist, und die zweite Teilkapazität (22) $C_{2,t}$ beim Optimierungsverfahren durch einen Schwellenwert $C_{2,limit,T}$ begrenzt ist, der durch ein Entladen innerhalb eines Zeitbereiches $T$ unter Berücksichtigung einer festgelegten Entladeleistungsgrenze $P_{max}$ und einer festgelegten minimalen zweiten Teilkapazität $C_{2,0}$ (22) maximal erreichbar ist.

12. Steuereinheit gemäß Anspruch 11, **dadurch gekennzeichnet, dass** diese dazu ausgebildet ist, weitere energietechnische Anlagen (11, 12, 13) innerhalb der Erneuerbaren-Energie-Gemeinschaft (1) zu steuern.

13. Steuereinheit gemäß Anspruch 11 oder 12, **dadurch gekennzeichnet, dass** diese dazu ausgebildet ist, die Stromaustausche zwischen den Energiesystemen der Erneuerbaren-Energie-Gemeinschaft (1) zu steuern.

14. Erneuerbare-Energie-Gemeinschaft (1), umfassend mehrere Energiesysteme, die dazu ausgebildet sind, Grünstrom (4) untereinander auszutauschen, sowie Graustrom (5) selbst zu verwenden und/oder für bezüglich der Erneuerbaren-Energie-Gemeinschaft (1) externe Energiesysteme bereitzustellen, **dadurch gekennzeichnet, dass** die Erneuerbare-Energie-Gemeinschaft (1) eine Steuereinheit gemäß einem der Ansprüche 11 bis 13 umfasst.

15. Erneuerbare-Energie-Gemeinschaft (1) gemäß Anspruch 14, **dadurch gekennzeichnet, dass** die Steuereinheit dazu ausgebildet ist, die Steuerung der Stromaustausche zwischen den Energiesystemen derart zu steuern, dass lediglich Grünstrom (4) zwischen den Energiesystemen ausgetauscht wird.

**EUROPÄISCHER RECHERCHENBERICHT**

Europäisches Patentamt
European Patent Office
Office européen des brevets

**Nummer der Anmeldung**

**EP 23 18 5014**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CN 113 824 111 A (WANKE ENERGY TECH CO LTD) 21. Dezember 2021 (2021-12-21) * Zusammenfassung; Ansprüche 1-3; Abbildungen 1-3 * | 1-15 | INV. H02J3/32 H02J3/38 |
| A | US 2022/108409 A1 (SCHRECK SEBASTIAN [DE] ET AL) 7. April 2022 (2022-04-07) * Zusammenfassung; Anspruch 1; Abbildung 1 * * Absatz [0021] * | 1-15 | |
| A | US 2022/140610 A1 (BANGALORE SUNDARA RAJU GIRIDHAR [IN] ET AL) 5. Mai 2022 (2022-05-05) * Zusammenfassung; Ansprüche; Abbildung 5 * * Absatz [0072] * | 1-15 | |
| A | DE 10 2019 125200 A1 (IBC SOLAR AG [DE]) 25. März 2021 (2021-03-25) * Zusammenfassung; Anspruch 1; Abbildungen 1-3 * * Absätze [0055], [0089] * | 1-15 | RECHERCHIERTE SACHGEBIETE (IPC) |
| A | US 2022/149630 A1 (BURCHARDT TRYGVE [US]) 12. Mai 2022 (2022-05-12) * Zusammenfassung; Ansprüche; Abbildungen * * Absatz [0054] – Absatz [0055] * | 1-15 | H02J |
| A | US 2022/121260 A1 (KING DAVID MICHAEL [US] ET AL) 21. April 2022 (2022-04-21) * Zusammenfassung; Anspruch 1; Abbildung 5a * * Absatz [0132] * | 1-15 | |

-/--

Der vorliegende Recherchenbericht wurde für alle Patentansprüche erstellt

| Recherchenort | Abschlußdatum der Recherche | Prüfer |
|---|---|---|
| München | 16. Januar 2024 | Rother, Stefan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**Seite 1 von 2**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CN 114 400 709 A (NATIONAL ENERGY CREDIT CONTROL INTERCONNECTION TECH LIMITED COMPANY ET) 26. April 2022 (2022-04-26) * das ganze Dokument * ----- | 1-15 | |
| A | MORADI HADIS ET AL: "Optimal operation of a multi-source microgrid to achieve cost and emission targets", 2016 IEEE POWER AND ENERGY CONFERENCE AT ILLINOIS (PECI), IEEE, 19. Februar 2016 (2016-02-19), Seiten 1-6, XP032895617, DOI: 10.1109/PECI.2016.7459258 [gefunden am 2016-04-25] * das ganze Dokument * ----- | 1-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 16. Januar 2024 | Rother, Stefan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-01-2024

| Im Recherchenbericht angeführtes Patentdokument | Datum der Veröffentlichung | Mitglied(er) der Patentfamilie | Datum der Veröffentlichung |
|---|---|---|---|
| CN 113824111 A | 21-12-2021 | KEINE | |
| US 2022108409 A1 | 07-04-2022 | AU 2020218393 A1 | 26-08-2021 |
| | | CN 113574760 A | 29-10-2021 |
| | | DE 102019201463 A1 | 06-08-2020 |
| | | EP 3903395 A1 | 03-11-2021 |
| | | KR 20210120095 A | 06-10-2021 |
| | | US 2022108409 A1 | 07-04-2022 |
| | | WO 2020160919 A1 | 13-08-2020 |
| US 2022140610 A1 | 05-05-2022 | US 2022140610 A1 | 05-05-2022 |
| | | US 2023361573 A1 | 09-11-2023 |
| DE 102019125200 A1 | 25-03-2021 | KEINE | |
| US 2022149630 A1 | 12-05-2022 | EP 4005048 A1 | 01-06-2022 |
| | | US 2022149630 A1 | 12-05-2022 |
| | | WO 2021019444 A1 | 04-02-2021 |
| US 2022121260 A1 | 21-04-2022 | AU 2020212963 A1 | 12-08-2021 |
| | | CA 3127441 A1 | 30-07-2020 |
| | | EP 3914992 A1 | 01-12-2021 |
| | | US 2022121260 A1 | 21-04-2022 |
| | | WO 2020154326 A1 | 30-07-2020 |
| CN 114400709 A | 26-04-2022 | KEINE | |

EPO FORM P0461

Für nähere Einzelheiten zu diesem Anhang : siehe Amtsblatt des Europäischen Patentamts, Nr.12/82